# EUROPÄISCHE PATENTANMELDUNG

(11) **EP 4 726 324 A1**
(43) Veröffentlichungstag der Anmeldung: **15.04.2026**
(21) Anmeldenummer: 25202956.6
(22) Anmeldetag: 18.09.2025
(51) Int. Cl.: G01B 7/02, G01B 11/04, G01B 11/02, G01B 7/04

(54) **VERFAHREN UND VORRICHTUNG ZUM BESTIMMEN EINES VERSCHLEISSZUSTANDS EINER LAUFROLLE EINER KURVENSTEUERUNG FÜR EINE BEHÄLTERBEHANDLUNGSMASCHINE**

(30) Priorität: 14.10.2024 DE 102024129696
(71) Anmelder: Krones AG, 93073 Neutraubling (DE)
(72) Erfinder: Eiwanger, Stefan, 93073 Neutraubling (DE); Scherl, Stefan, 93073 Neutraubling (DE); Tauber, Jan, 93073 Neutraubling (DE)
(74) Vertreter: Grünecker Patent- und Rechtsanwälte PartG mbB

(57) **Zusammenfassung**

Verfahren zum Bestimmen eines Verschleißzustands einer Laufrolle einer Kurvensteuerung für eine Behälterbehandlungsmaschine, wobei die Kurvensteuerung eine Steuerkurve, wenigstens eine entlang der Steuerkurve beweglich geführte Laufrolle und ein mit der Laufrolle entlang der Steuerkurve mitgeführtes Messelement umfasst, wobei die Steuerkurve eine Sensorvorrichtung umfasst, wobei die Laufrolle beim Entlanglaufen an der Steuerkurve an der Sensorvorrichtung vorbeigeführt wird und beim Vorbeiführen der Laufrolle mittels der Sensorvorrichtung ein Abstandswert zwischen dem Messelement und der Sensorvorrichtung bestimmt wird, wobei basierend auf dem Abstandswert ein Verschleißzustand der Laufrolle bestimmt wird.

## Beschreibung

Die vorliegende Erfindung betrifft ein Verfahren zum Bestimmen eines Verschleißzustands einer Laufrolle einer Kurvensteuerung für eine Behälterbehandlungsmaschine gemäß unabhängigem Anspruch 1 und eine Kurvensteuerung für eine Behälterbehandlungsmaschine entsprechend unabhängigem Anspruch 8.

### Stand der Technik

Kurvensteuerungen für Behälterbehandlungsmaschinen sind aus dem Stand der Technik bekannt.

Kurvensteuerungen umfassen generell eine Steuerkurve, welche auch Steuerbahn genannt wird, und wenigstens eine Laufrolle, welche entlang der Steuerkurve geführt werden kann. Durch das Entlangführen der Laufrolle entlang der Steuerkurve kann wiederum eine mit der Laufrolle in Verbindung stehende Komponente, beispielweise eine Komponente einer Behälterbehandlungsmaschine, gesteuert werden. Beispielsweise kann basierend auf einer Form der Steuerkurve ein zeit- und ortsabhängiger Hub der mit der Laufrolle in Verbindung stehenden Komponente generiert werden. Durch Veränderung einer Form der Steuerkurve können bestimmte, beispielsweise an einen Prozess angepasste Hubmuster für die Komponente erzeugt werden.

Aufgrund der beim Entlangführen der Laufrolle entlang der Steuerkurve auftretenden Reibungskräfte kann es mit der Zeit zu einem Verschleiß der Laufrolle kommen. Beispielsweise kann es zu einer unerwünschten Abtragung einer Lauffläche der Laufrolle kommen. Die verschleißbedingte Reduzierung der Lauffläche kann sich wiederum negativ auf die Steuerkurve oder auf die Steuerung der mit der Laufrolle in Verbindung stehenden Komponente auswirken. Beispielweise kann es zu einer Beschädigung der Steuerkurve durch die Laufrolle oder zu einer ungewünschten Veränderung des Hubmusters der Komponente kommen.

### Technische Aufgabe

Ausgehend vom bekannten Stand der Technik liegt die Aufgabe der vorliegenden Erfindung darin, ein Verfahren und eine Vorrichtung anzugeben, welche eine kontinuierliche Überwachung eines Verschleißzustands einer Kurvensteuerung ermöglichen.

### Lösung

Diese Aufgabe wird durch das Verfahren zum Bestimmen eines Verschleißzustands einer Laufrolle einer Kurvensteuerung für eine Behälterbehandlungsmaschine gemäß unabhängigem Anspruch 1 und die Kurvensteuerung für eine Behälterbehandlungsmaschine gemäß unabhängigem Anspruch 8 gelöst. Bevorzugte Ausführungsformen sind in den unabhängigen Ansprüchen erfasst.

Erfindungsgemäß ist ein Verfahren zum Bestimmen eines Verschleißzustands einer Laufrolle einer Kurvensteuerung für eine Behälterbehandlungsmaschine vorgesehen, wobei die Kurvensteuerung eine Steuerkurve, wenigstens eine entlang der Steuerkurve beweglich geführte Laufrolle und ein mit der Laufrolle entlang der Steuerkurve mitgeführtes Messelement umfasst, wobei die Steuerkurve eine Sensorvorrichtung umfasst, wobei die Laufrolle beim Entlanglaufen an der Steuerkurve an der Sensorvorrichtung vorbeigeführt wird und beim Vorbeiführen der Laufrolle mittels der Sensorvorrichtung ein Abstandswert zwischen dem Messelement und der Sensorvorrichtung bestimmt und basierend auf dem Abstandswert ein Verschleißzustand der Laufrolle bestimmt wird.

Der Verschleißzustand kann den aktuellen Zustand der Laufrolle in Relation zu einem Ausgangszustand der Laufrolle setzen. Der Ausgangszustand der Laufrolle kann beispielsweise ein Neuzustand der Laufrolle sein. Der Verschleißzustand kann beispielsweise in Prozent angegeben sein, wobei ein Verschleißzustand von 0% bedeuten kann, dass sich die Laufrolle in einem Ausgangszustand befindet und kein Verschleiß stattgefunden hat. Ein Verschleißzustand von 100% kann wiederum bedeuten, dass die Rolle vollkommen verschlissen ist. Der Neuzustand oder der vollkommen verschlissene Zustand können jedoch auch durch jeden anderen Prozentwert beziehungsweise Verschleißzustand beschrieben sein. Die Angabe des Verschleißzustands in Prozent ist als beispielhaft zu verstehen, der Verschleiß kann auch beispielsweise als durch den Abstandswert (als Absolutwert oder Relativwert) definiert oder festgelegt werden.

Bei der Laufrolle kann es sich um eine Metall und/oder Kunststoff umfassende Laufrolle handeln. Beispielweise kann eine Lauffläche, auf welcher die Laufrolle entlang der Steuerkurve geführt wird bzw. umläuft aus Kunststoff gefertigt sein oder Kunststoff umfassen. Beispielweise kann eine Lauffläche, auf welcher die Laufrolle entlang der Steuerkurve geführt wird bzw. umläuft aus Carbon gefertigt sein oder Carbon umfassen Die Laufrolle kann mittels einer Führungseinrichtung beweglich an der Steuerkurve geführt sein. Die Führungseinrichtung kann wiederum mit einer Komponente der Behälterbehandlungsmaschine in Verbindung stehen, welche beispielsweise einen Behandlungsschritt an einem Behälter durchführt oder an der Durchführung eines Behandlungsschrittes an einem Behälter beteiligt ist. Durch das Führen der Laufrolle entlang der Steuerkurve kann beispielsweise eine Steuerung eines Bewegungsablaufs der Komponente, wie beispielsweise eine Auslenkung der Komponente aus einer Ruhelage, durchgeführt werden. Bei der Komponente kann es sich beispielsweise um eine Komponente einer Etikettiermaschine handeln.

Die Steuerkurve kann scheibenartig ausgestaltet sein und eine beliebige Form und Größe aufweisen. Beispielsweise kann es auch vorgesehen sein, dass die Steuerkurve einen scheibenartigen Grundkörper und ein ringartiges Profil umfasst, welches entlang des Umfangs des scheibenartigen Grundkörpers angebracht ist. Die Laufrolle kann beispielsweise entlang des ringartigen Profils geführt sein. Durch die Form und Größe der Steuerkurve kann eine Bewegung der wenigstens einen Laufrolle beim Führen der Laufrolle entlang der Steuerkurve beeinflusst werden. Die Steuerkurve kann beispielsweise ein Metall und/oder einen Kunststoff umfassen. Die Steuerkurve kann auch mittels eines generativen Verfahrens gefertigt sein.

Bei dem Messelement kann es sich um ein passives Messelement handeln. Passiv kann dabei so verstanden werden, dass das Messelement keine Elektronik umfassen muss, um aktiv eine Messung durchzuführen. Das Messelement kann als Gegenstück zur Sensorvorrichtung verstanden werden und beim Vorbeiführen der Laufrolle an der Sensorvorrichtung im Zusammenspiel mit der Sensorvorrichtung die Messung des Abstandes ermöglichen.

Bei der Sensorvorrichtung kann es sich um eine Vorrichtung handeln, welche zum Messen eines Abstandes ausgebildet ist. Die Sensorvorrichtung kann beispielsweise ausgebildet sein, den Abstandswert optisch, akustisch oder induktiv zu bestimmen. Die eben genannten Arten der Ausgestaltung der Sensorvorrichtung sind als beispielhaft zu verstehen, so dass die Sensorvorrichtung den Abstand auch basierend auf einem anderen zur Abstandsmessung geeigneten Messprinzip bestimmen kann.

Bei der Behälterbehandlungsmaschine kann es sich beispielsweise um eine Etikettiermaschine für Behälter handeln. Es kann sich jedoch auch um jede andere Art von Behälterbehandlungsmaschine, wie beispielsweise eine Blasformmaschine oder eine Füllmaschine handeln.

Der Abstandsmesswert kann beispielsweise in der Einheit Meter, Zentimeter, Millimeter oder jeder anderen zur (numerischen) Darstellung eines Abstands geeigneten Einheit dargestellt sein.

Durch das erfindungsgemäße Verfahren kann ein Abstandswert zwischen dem Messelement und der Sensorvorrichtung bei jedem Vorbeilaufen der Laufrolle an der Sensorvorrichtung bestimmt und basierend auf dem Abstandswert wiederum der Verschleißzustand der Laufrolle bestimmt werden. Auf diese Weise kann eine kontinuierliche Überwachung des Verschleißzustands der Laufrolle erreicht werden und durch eine verschlissene Laufrolle hervorgerufene Beschädigungen an der Steuerkurve verhindert werden.

In einer Ausführungsform kann es vorgesehen sein, dass die Laufrolle zum Bestimmen des Abstandswerts *N >* 1 mal an der Sensorvorrichtung vorbeigeführt wird, wobei bei jedem Vorbeiführen der Laufrolle an der Sensorvorrichtung ein Abstandswert zwischen dem Messelement und der Sensorvorrichtung bestimmt wird, wobei nach einem *N*-maligen Vorbeiführen der Laufrolle an der Sensorvorrichtung ein minimaler Abstandswert der *N* Abstandswerte bestimmt wird und basierend auf dem minimalen Abstandswert der Verschleißzustand bestimmt wird. Bei *N* kann es sich um eine natürliche Zahl größer Null handeln. Auf diese Weise kann auch bei einem unregelmäßigen Verschleiß der Laufrolle, eine hinreichend genaue Bestimmung des Verschleißzustands erreicht werden.

In einer Weiterbildung der vorhergehenden Ausführungsform kann es vorgesehen sein, dass der minimale Abstandswert nach *N*-maligem Vorbeiführen der Laufrolle an der Sensorvorrichtung gleitend bestimmt wird, wobei nach einem (*N+i*)-maligen Vorbeiführen der Laufrolle an der Sensorvorrichtung, der minimale Abstandswert der Abstandswerte der letzten *N* Durchläufe bestimmt wird und basierend auf dem minimalen Abstandswert der letzten *N* Durchläufe der Verschleißzustand bestimmt wird. Durch die gleitende Bestimmung des minimalen Abstandswertes kann der minimale Abstandswert auch als Funktion der Zeit bestimmt werden.

In einer Ausführungsform kann es vorgesehen sein, dass der Verschleißzustand basierend auf einer Veränderung des minimalen Abstandswertes mit der Zeit bestimmt wird. Somit kann der Verschleißzustand kontinuierlich bestimmt und ein zeitabhängiger Verschleiß abgeleitet werden. Hierauf basierend kann beispielsweise auch ein Verschleiß in der Zukunft extrapoliert werden.

In einer Weiterbildung der vorhergehenden Ausführungsform kann es vorgesehen sein, dass, wenn eine Differenz zwischen zwei nacheinander bestimmten Abstandswerten zwischen dem Messelement und der Sensorvorrichtung größer als ein Schwellenwert ist, bestimmt wird, dass ein Defekt an der Laufrolle vorliegt. Auf diese Weise kann beispielsweise festgestellt werden, wenn ein Teil der Lauffläche durch Abnutzung ausgeschlagen oder ausgebrochen ist und ein sofortiger Tausch der Laufrolle notwendig ist.

In einer Ausführungsform kann vorgesehen sein, dass das Messelement eine im Wesentlichen zylindrische Form aufweist und eine Längsachse des Messelements parallel zu einer Rotationsachse der Laufrolle ausgerichtet ist oder eine Längsachse des Messelements mit einer Rotationsachse der Laufrolle zusammenfällt. Unter im Wesentlichen zylindrische Form kann verstanden werden, dass das Messelement entweder eine zylindrische Form aufweist oder eine Form aufweist, welche nur geringfügig von der zylindrischen Form abweicht. Bei der geringfügig von der zylindrischen Form abweichenden Form kann es sich beispielsweise um eine elliptische Form handeln. Durch die zylindrische Form kann eine genaue Abstandsmessung zwischen Sensorvorrichtung und Messelement unabhängig von einem Drehwinkel der Laufrolle bezüglich einer Ruhelage bestimmt werden. Wenn die Längsachse des Messelements mit der Rotationsachse der Laufrolle zusammenfällt, dann kann unabhängig vom Drehwinkel des Messelements basierend auf dem gemessenen Abstandswert direkt der Verschleißzustand bestimmt werden.

Es kann ferner vorgesehen sein, dass die Sensorvorrichtung eine optische Sensoreinheit, beispielsweise einen Laser, eine akustische Sensoreinheit, beispielsweise einen Ultraschallsensor, oder eine induktive Sensoreinheit umfasst, wobei wenn die Sensorvorrichtung die induktive Sensoreinheit umfasst, das Messelement ein Metall umfasst. Bei entsprechender Ausgestaltung der Sensoreinheit kann eine zuverlässige und präzise Messung des Abstandswertes erreicht werden.

Erfindungsgemäß ist zudem eine Kurvensteuerung für eine Behälterbehandlungsmaschine vorgesehen, wobei die Kurvensteuerung eine Steuerkurve, wenigstens eine entlang der Steuerkurve beweglich geführte Laufrolle, ein mit der Laufrolle entlang der Steuerkurve mitgeführtes Messelement und eine Steuereinheit umfasst, wobei die Steuerkurve eine Sensorvorrichtung umfasst, wobei die Laufrolle beim Entlanglaufen an der Steuerkurve an der Sensorvorrichtung vorbeigeführt und beim Vorbeiführen der Laufrolle mittels der Sensorvorrichtung ein Abstandswert zwischen dem Messelement und der Sensorvorrichtung bestimmt werden kann, wobei die Steuereinheit ausgebildet ist, basierend auf dem Abstandswert ein Verschleißzustand der Laufrolle zu bestimmen.

Durch die erfindungsgemäße Steuerkurve kann ein Abstandswert zwischen dem Messelement und der Sensorvorrichtung bei jedem Durchlauf bestimmt und basierend auf dem Abstandswert der Verschleißzustand der Laufrolle bestimmt werden. Auf diese Weise kann eine kontinuierliche Überwachung des Verschleißzustands der Laufrolle erreicht werden und durch verschlissene Laufrollen hervorgerufene Beschädigungen an der Steuerkurve verhindert werden.

In einer Ausführungsform kann es vorgesehen sein, dass die Laufrolle zum Bestimmen des Abstandswertes *N* > 1 mal an der Sensorvorrichtung vorbeigeführt werden kann, wobei bei jedem Vorbeiführen der Laufrolle an der Sensorvorrichtung ein Abstandswert zwischen dem Messelement und der Sensorvorrichtung bestimmt wird, wobei die Steuereinheit ausgebildet ist, nach einem *N*-maligen Vorbeiführen der Laufrolle an der Sensorvorrichtung einen minimalen Abstandswert der *N* Abstandswerte zu bestimmen und die Steuereinheit ausgebildet ist, basierend auf dem minimalen Abstandswert den Verschleißzustand zu bestimmen. Auf diese Weise kann auch bei einem unregelmäßigen Verschleiß der Laufrolle, eine hinreichend genaue Bestimmung des Verschleißzustands erreicht werden.

In einer Weiterbildung der vorhergehenden Ausführungsform kann es vorgesehen sein, dass die Steuereinheit ausgebildet ist, den minimalen Abstandswert nach *N*-maligem Vorbeiführen der Laufrolle an der Sensorvorrichtung gleitend zu bestimmen, wobei nach einem (*N* + *i*)-maligen Vorbeiführen der Laufrolle an der Sensorvorrichtung, der minimale Abstandswert der Abstandswerte der letzten *N* Durchläufe bestimmt wird und die Steuereinheit ausgebildet ist, basierend auf dem minimalen Abstandswert der letzten *N* Durchläufe den Verschleißzustand zu bestimmen. Durch die gleitende Bestimmung des minimalen Abstandswertes kann der minimale Abstandswert auch als Funktion der Zeit bestimmt werden.

Weiterhin kann es vorgesehen sein, dass die Steuereinheit ausgebildet ist, den Verschleißzustand basierend auf einer Veränderung des minimalen Abstandswertes mit der Zeit zu bestimmen. Somit kann der Verschleißzustand kontinuierlich bestimmt und ein zeitabhängiger Verschleiß abgeleitet werden. Hierauf basierend kann beispielsweise auch ein Verschleiß in der Zukunft extrapoliert werden.

In einer Weiterbildung der vorhergehenden Ausführungsform kann es vorgesehen sein, dass die Steuereinheit ausgebildet ist zu bestimmen, dass ein Defekt an der Laufrolle vorliegt, wenn eine Differenz zwischen zwei nacheinander bestimmten Abstandswerten zwischen dem Messelement und der Sensorvorrichtung größer als ein Schwellenwert ist. Auf diese Weise kann beispielsweise bestimmt werden, wenn ein Teil der Lauffläche durch Abnutzung ausgeschlagen oder ausgebrochen ist und ein sofortiger Tausch der Laufrolle notwendig ist.

In einer Ausführungsform kann es vorgesehen sein, dass das Messelement eine im Wesentlichen zylindrische Form aufweist und eine Längsachse des Messelements parallel zu einer Rotationsachse der Laufrolle ausgerichtet ist oder wobei eine Längsachse des Messelements mit einer Rotationsachse der Laufrolle zusammenfällt. Durch die zylindrische Form kann eine genaue Abstandsmessung zwischen Sensorvorrichtung und Messelement unabhängig von einem Drehwinkel der Laufrolle bezüglich einer Ruhelage bestimmt werden. Wenn die Längsachse des Messelements mit der Rotationsachse der Laufrolle zusammenfällt, dann kann unabhängig vom Drehwinkel des Messelements basierend auf dem gemessenen Abstandswert direkt der Verschleißzustand bestimmt werden.

In einer Ausführungsform kann es vorgesehen sein, dass die Sensorvorrichtung eine optische Sensoreinheit, wie beispielsweise einen Laser, eine akustische Sensoreinheit, wie beispielsweise einen Ultraschallsensor, oder eine induktive Sensoreinheit umfasst, wobei wenn die Sensorvorrichtung die induktive Sensoreinheit umfasst, das Messelement ein Metall umfasst. Bei entsprechender Ausgestaltung der Sensorvorrichtung kann eine zuverlässige und präzise Messung des Abstandswertes erreicht werden.

Ferner kann die Sensorvorrichtung mittels einer Haltevorrichtung an der Steuerkurve befestigt sein, wobei eine Messrichtung entlang welcher der Abstandswert zwischen der Sensorvorrichtung und dem Messelement bestimmt werden kann, senkrecht auf einer Rotationsachse des Messelements steht. Durch entsprechende Anordnung der Sensorvorrichtung kann eine präzise Messung des Abstandswertes sichergestellt werden.

### Kurze Figurenbeschreibung

- **Fig. 1:**: Kurvensteuerung für eine Behälterbehandlungsmaschine gemäß einer Ausführungsform
- **Fig. 2:**: Kurvensteuerung für eine Behälterbehandlungsmaschine gemäß einer weiteren Ausführungsform

### Ausführliche Figurenbeschreibung

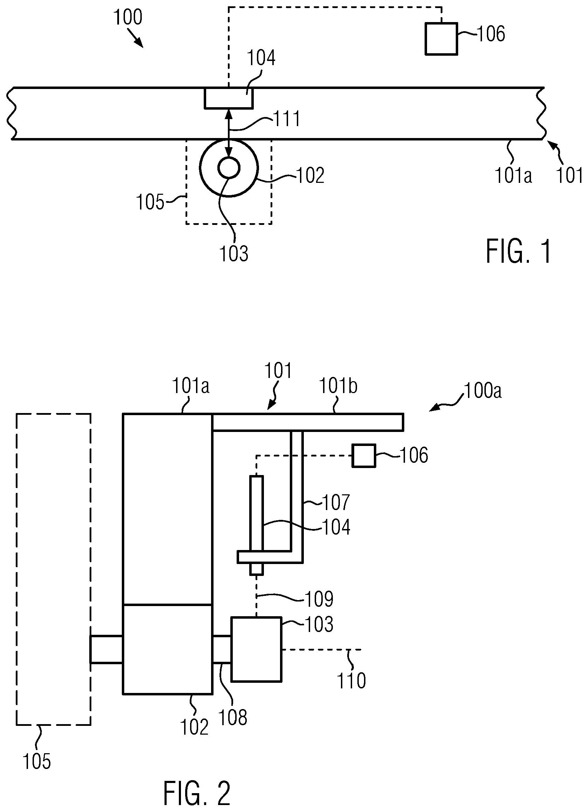

Fig. 1 zeigt einen Teilbereich einer Kurvensteuerung 100 für eine Behälterbehandlungsmaschine gemäß einer Ausführungsform.

Erfindungsgemäß umfasst die Kurvensteuerung 100 eine Steuerkurve 101, wenigstens eine entlang der Steuerkurve 101 beweglich geführte Laufrolle 102, ein mit der Laufrolle 102 entlang der Steuerkurve 101 mitgeführtes Messelement 103 und eine Steuereinheit 106. Dass in der Fig. 1 nur eine Laufrolle 102 entlang der Steuerkurve 101 geführt ist, ist als beispielhaft zu verstehen. Es kann auch mehr als eine Laufrolle 102, beispielsweise 5, 10, 30 Laufrollen oder jede andere Zahl von Laufrollen entlang der Steuerkurve 101 geführt werden. Die Laufrollen können dabei unabhängig voneinander entlang der Steuerkurve 101 geführt werden.

Aus Darstellungsgründen ist in der Fig. 1 nur ein Teilbereich der Steuerkurve 101 der Kurvensteuerung 100 gezeigt. Prinzipiell kann die Steuerkurve 101 als geschlossene Struktur ausgestaltet sein, entlang welcher die wenigstens eine Laufrolle 102 entlang einer geschlossenen Bahn geführt werden kann.

Bei der Behälterbehandlungsmaschine kann es sich um jede zur Behandlung von Behältern geeignete Maschine, wie beispielsweise eine Etikettiermaschine handeln. Es kann sich jedoch auch um jede andere Behälterbehandlungsmaschine, wie beispielsweise eine Blasformmaschine oder eine Füllmaschine handeln.

Die Steuerkurve 101 umfasst erfindungsgemäß eine Sensorvorrichtung 104, wobei die Laufrolle 102 beim Entlanglaufen an der Steuerkurve 101 an der Sensorvorrichtung 104 vorbeigeführt werden kann. Erfindungsgemäß kann beim Vorbeiführen der Laufrolle 102 mittels der Sensorvorrichtung 104 ein Abstandswert 111 zwischen dem Messelement 103 und der Sensorvorrichtung 104 bestimmt werden. Basierend auf dem Abstandswert 111 kann einen Verschleißzustand der Laufrolle 102 bestimmt werden.

Die Steuerkurve 101 kann beispielsweise ein Metall und/oder einen Kunststoff umfassen und als geschlossene Bahn ausgestaltet sein. Die Steuerkurve kann beispielsweise mittels eines generativen Verfahrens gefertigt sein. Auf diese Weise können auch komplex geformte Steuerkurven 101 auf kostengünstige Weise gefertigt werden.

Die Steuerkurve 101 kann jede beliebige Form aufweisen, welche zum Steuern eines Bewegungsablaufs einer Komponente einer Behälterbehandlungseinheit einer Behälterbehandlungsmaschine durch Führen der mit der Komponente in Verbindung stehenden Laufrolle entlang der Steuerkurve 101 geeignet ist. Die Laufrolle kann mittels einer Führungseinrichtung 105 mit der Komponente in Verbindung stehen.

Die Steuerkurve 101 kann beispielsweise als Platte ausgestaltet sein, wobei die Laufrolle 102 entlang einer Seitenfläche der Steuerkurve 101 geführt wird.

Es kann jedoch auch vorgesehen sein, dass ein Grundkörper der Steuerkurve 101 als Grundplatte ausgestaltet ist und auf der Grundplatte entlang einer Richtung, welche senkrecht oder im Wesentlichen senkrecht auf einer durch die Grundplatte aufgespannten Ebene steht, ein Profil entlang des Umfangs der Grundplatte auf der Grundplatte aufgebracht ist. Unter im Wesentlichen senkrecht kann ein Winkel zwischen 85° und 95° oder ein Winkel zwischen 80° und 100° verstanden werden. Die Laufrolle 102 kann entlang dem Profil der Steuerkurve 101 geführt werden. Es kann auch vorgesehen sein, dass sich ein Winkel zwischen der Ebene der Platte und dem Profil entlang des Umfangs der Steuerkurve verändert.

Alternativ kann es auch vorgesehen sein, dass das eben beschriebene Profil seitlich an der Grundplatte entlang deren Umfang angebracht ist. Die Variante bei welcher das Profil 101a seitlich an der Grundplatte entlang deren Umfang angebracht ist, ist in der Fig. 1 gezeigt, in welcher das Profil 101a der Steuerkurve 101 dargestellt ist. In der Fig. 1 wird die Laufrolle 102 somit entlang des Profils 101a der Steuerkurve 101 geführt.

Die Grundplatte der Steuerkurve 101 kann beispielsweise durch eine geschlossene Fläche gebildet sein. Es kann jedoch auch vorgesehen sein, dass die Grundplatte eine Aussparung umfasst. Die Grundplatte kann kreisförmig ausgestaltet sein, kann jedoch auch von der kreisförmigen Form abweichen. Die Abweichung von der kreisförmigen Form kann beispielsweise dann vorgesehen sein, wenn die Laufrolle 102 an einer Seitenfläche der Grundplatte entlanggeführt wird. Umfasst die Grundplatte wie oben beschrieben ein Profil 101a, dann kann es vorgesehen sein, dass sich eine Höhe des Profils 101a entlang des Umfangs der Steuerkurve 101 verändert, so dass beim Führen der Laufrolle 102 entlang des Profils 101a mit veränderlicher Höhe ein bestimmter Bewegungsablauf einer mit der Laufrolle 102 in Verbindung stehender Komponente einer Behandlungseinheit der Behälterbehandlungsmaschine erzeugt werden kann.

Die Steuerkurve 101 kann beispielsweise einer Rundläufermaschine der Behälterbehandlungsmaschine zugeordnet sein und zur Steuerung eines Bewegungsablaufs wenigstens einer auf der Rundläufermaschine angeordneten Behälterbehandlungseinheit oder einer Komponente einer Behälterbehandlungseinheit vorgesehen sein. Die Steuerkurve 101 kann dabei stationär angeordnet sein, so dass diese bei einer Rotation der Rundläufermaschine nicht mitrotiert wird. Wird die Rundläufermaschine nun in Rotation versetzt, so kann die Laufrolle 102, welche mit einer Behandlungseinheit oder einer Komponente der Behandlungseinheit der Rundläufermaschine über die Führungseinrichtung 105 in Verbindung steht, entlang der Steuerkurve 101 geführt werden. Basierend auf einer Form der Steuerkurve 101, beziehungsweise einer sich ändernden Höhe des in der Fig. 1 dargestellten Profils 101a der Steuerkurve 101 entlang der Umlaufrichtung, können durch das Führen der Laufrolle 102 entlang der Steuerkurve 101 verschiedene Bewegungsmuster der Behälterbehandlungseinheit oder der Komponente erreicht werden. Mittels der Kurvensteuerung 101 kann somit auf mechanische Weise bei jedem Umlauf der Rundläufermaschine ein wiederkehrender Bewegungsablauf der Behandlungseinheit oder der Komponente der Behandlungseinheit erreicht werden.

Beispielsweise kann es sich bei der Komponente der Behandlungseinheit um eine Etikettierkomponente einer Ekitkettiermaschine handeln. Die Etikettierkomponente kann beispielsweise eine Halterung für Behälter oder eine Stempelvorrichtung zum Aufbringen von Etiketten sein. Es kann sich jedoch beispielsweise auch um eine Blasformkomponente einer Blasformmaschine, wie beispielsweise eine Reckstange handeln. Auch jede andere Art von Behandlungseinheit oder Komponente einer Behandlungseinheit ist denkbar.

Die Laufrolle 102 kann ein Metall und/oder einen Kunststoff umfassen. Beispielsweise kann eine Lauffläche der Laufrolle 102 aus einem Kunststoff gefertigt sein, um eine Beschädigung der Steuerkurve 101 beim Führen der Laufrolle entlang des Profils 101a der Steuerkurve 101 zu vermeiden. Eine Felge der Laufrolle kann beispielsweise ein Metall und/oder einen Kunststoff umfassen. Weiterhin kann es vorgesehen sein, dass die Felge ein Kugellager umfasst.

Das Messelement 103 kann ein Metall und/oder einen Kunstsoff umfassen. Eine Zusammensetzung des Messelements kann beispielsweise basierend auf einer Ausgestaltung der Sensorvorrichtung 104 gewählt sein.

Bei dem Messelement 103 kann es sich um ein passives Messelement handeln. Passiv kann dabei so verstanden werden, dass das Messelement keine Elektronik enthalten muss, welche zur Abstandsmessung notwendig ist. Das Messelement 103 kann beispielsweise als Reflektorelement ausgestaltet sein, an welchem beispielsweise von der Sensorvorrichtung 104 emittierte Strahlung oder Schallwellen reflektiert werden können. Das Messelement 103 muss jedoch nicht zwangsweise passiv sein, sondern kann auch Elektronik umfassen, welche im Zusammenspiel mit der Sensorvorrichtung zur Abstandsmessung vorgesehen ist.

Das Messelement 103 kann eine im Wesentlichen zylindrische Form aufweisen und eine Längsachse des Messelements 103 kann parallel zu einer Rotationsachse der Laufrolle 102 ausgerichtet sein oder eine Längsachse des Messelements 103 kann mit einer Rotationsachse der Laufrolle 102 zusammenfallen. Im Wesentlichen zylindrisch kann dabei so verstanden werden, dass das Messelement eine zylindrische Form aufweist oder eine Form aufweist, welche geringfügig von der zylindrischen Form abweicht. Eine geringfügige Abweichung kann beispielsweise bedeuten, dass der Umfang des Messelements nicht kreisförmig, sondern elliptisch ausgestaltet ist.

Um eine möglichst präzise Bestimmung des Verschleißzustands zu erreichen, kann es vorgesehen sein, das Messelement 103 wie oben beschrieben, zylindrisch auszugestalten und so bzgl. der Laufrolle 102 anzuordnen, dass dessen Längsachse mit einer Rotationsachse der Laufrolle 102 zusammenfällt. Um dies zu erreichen kann das Messelement 103 beispielsweise über eine hier nicht dargestellte Zylinderschraube mit der Laufrolle 102 verbunden sein. Bei entsprechender Anordnung von Laufrolle 102 und Messelement 103 kann erreicht werden, dass eine zwischen Sensorvorrichtung 104 und Messelement 103 gemessene Abstandsänderung zwischen wenigstens zwei Durchläufen nur von einem Verschleiß der Laufrolle 102, wie beispielsweise einer Abnutzung der Lauffläche abhängt.

Weist das Messelement 103 beispielsweise eine von der zylindrischen Form abweichende Form auf, so können zusätzliche Korrekturen der gemessenen Abstandswerte notwendig sein, welche von einem Drehwinkel des Messelements 103 beim Vorbeiführen des Messelements 103 an der Sensorvorrichtung 104 abhängen können.

Bei der Sensorvorrichtung 104 kann es sich um eine beliebige Sensorvorrichtung handeln, welche zum Bestimmen eines Abstandswertes geeignet ist.

Beispielsweise kann es sich bei der Sensorvorrichtung 104 um eine induktive Sensoreinheit handeln. In diesem Fall kann es vorgesehen sein, dass das Messelement ein Metall umfasst.

Die induktive Sensoreinheit kann beispielsweise eine Spule umfassen und ausgebildet sein, mittels der Spule ein magnetisches Wechselfeld zu erzeugen, welches wiederum in dem metallischen Messelement 103 Wirbelströme induziert. Die im Messelement induzierten Wirbelströme wirken ihrer Ursache entgegen und beeinflussen auf diese Weise eine Impedanz der Spule. Hierauf basierend kann wiederum der Abstand zwischen Sensorvorrichtung 104 und Messelement 103 bestimmt werden. Die eben beschriebene Ausgestaltung der induktiven Sensorvorrichtung ist als beispielhaft zu verstehen. Die induktive Sensoreinheit kann auch auf andere Weise ausgebildet sein, um den Abstand zwischen der induktiven Sensoreinheit und dem Messelement zu bestimmen.

Alternativ kann es sich bei der Sensorvorrichtung 103 auch um eine optische Sensoreinheit, welche beispielsweise einen Laser umfasst, handeln. Die optische Sensoreinheit kann ferner einen Detektor umfassen, mittels welchem ein durch die optische Sensoreinheit emittierter Laserpuls, welcher durch das Messelement 103 beim Vorbeiführen des Messelements 103 an der Sensorvorrichtung 104 reflektiert wird, detektiert werden kann. Basierend auf der Laufzeit des Laserpulses zwischen Emission und Detektion kann wiederum der Abstandswert zwischen Sensorvorrichtung 104 und Messelement 103 bestimmt werden. Die optische Sensoreinheit kann jedoch auch eine alternative Lichtquelle, wie beispielsweise eine Lichtquelle, welche Infrarotstrahlung emittiert, oder jede andere zur Abstandsmessung geeignete Lichtquelle umfassen. Im Falle einer optischen Sensorvorrichtung muss das Messelement nicht zwangsläufig ein Metall umfassen, um den Abstandswert zu bestimmen. Es kann dennoch vorgesehen sein, dass das Messelement bei Verwendung einer optischen Sensoreinheit ein Metall umfasst.

Ferner kann die Sensorvorrichtung 104 auch als akustische Sensoreinheit ausgestaltet sein. Beispielsweise kann die Sensorvorrichtung eine Ultraschallquelle und einen Ultraschalldetektor umfassen. Die Ultraschallquelle kann Ultraschall emittieren, welcher beim Vorbeiführen des Messelements 103 an der Sensorvorrichtung 104 durch das Messelement 103 reflektiert und mittels dem Detektor detektiert werden kann. Basierend auf der Laufzeit des Ultraschalls zwischen Emission und Detektion kann der Abstand zwischen Sensorvorrichtung 104 und Messelement 103 bestimmt werden. Dass die akustische Sensorvorrichtung eine Ultraschallquelle und einen Ultraschalldetektor umfasst, ist als beispielhaft zu verstehen. Die akustische Sensoreinheit kann auch ausgebildet sein, jede andere Art von akustischer Quelle, welche zur Abstandsmessung geeignet ist, und akustischem Detektor zu umfassen. Auch im Fall der akustischen Sensoreinheit muss das Messelement 103 nicht zwangsläufig ein Metall umfassen, um den Abstand zwischen Sensorvorrichtung und Messelement bestimmen zu können. Es kann jedoch dennoch vorgesehen sein, dass das Messelement 103 ein Metall umfasst.

Die oben beschriebenen Ausgestaltungsarten der Sensorvorrichtung 104 sind als beispielhaft zu verstehen. Die Sensorvorrichtung 104 kann auch auf jede andere Weise, welche zum Messen eines Abstands zwischen Sensorvorrichtung 104 und Messelement 103 geeignet ist, ausgestaltet sein.

Optional kann die Sensorvorrichtung 104 mittels einer Haltevorrichtung an der Steuerkurve 101 befestigt sein. Dies wird später im Zusammenhang mit der Fig. 2 genauer beschrieben.

Die Sensorvorrichtung 104 kann dabei derart an der Steuerkurve 101 befestigt sein, dass eine Messrichtung entlang welcher der Abstandswert zwischen der Sensorvorrichtung 104 und dem Messelement 103 bestimmt wird, senkrecht auf einer Rotationsachse des Messelements 103 steht. Auf diese Weise kann sichergestellt werden, dass das Messelement 103, beziehungsweise eine Rotationsachse des Messelements 103, nicht bezüglich der Messrichtung verkippt ist. Somit kann eine besonders präzise Bestimmung des Abstandswertes erreicht werden.

Es kann jedoch auch vorgesehen sein, dass Messrichtung und Rotationsachse geringfügig zueinander verkippt sind. Beispielsweise kann eine Verkippung von 2°, 5° oder 10° bezüglich der senkrechten Ausrichtung vorgesehen sein.

Basierend auf dem durch die Sensorvorrichtung 104 bestimmten Abstandswert zwischen Messelement 103 und Sensorvorrichtung 104 kann der Verschleißzustand der Laufrolle 102 bestimmt werden.

Optional kann es vor einer Inbetriebnahme der Kurvensteuerung 101 vorgesehen sein, dass während einem Initialisierungsvorgang ein initialer Abstandswert zwischen Sensorvorrichtung 104 und Messelement 103 bestimmt wird. Diesem initialen Abstandswert kann ein bestimmter Verschleißzustand der Laufrolle 102 zugeordnet werden.

Handelt es sich beispielsweise um eine neue Laufrolle 102 kann dem initialen Abstandswert ein Verschleißzustand von 0% zugeordnet werden, welcher dem Verschleißzustand einer neuen Laufrolle entspricht, die noch keine Verschleißerscheinungen aufweist. Es kann der neuen Laufrolle 102 jedoch auch jeder andere Verschleißzustand zugeordnet werden. Handelt es sich bei der Laufrolle 102 um keine neue Laufrolle, sondern um eine Laufrolle, welche bereits Abnutzungserscheinungen aufweist, so kann dem initialen Abstandswert auch ein anderer Verschleißzustand zugeordnet werden. Optional kann beispielsweise auch vorgesehen sein, dass die Sensorvorrichtung 104 eine Erkennungseinrichtung umfasst, welche die verwendete Laufrolle klassifizieren kann, so dass dem initialen Abstandswert basierend auf dem Laufrollentyp ein initialer Verschleißzustand zugeordnet werden kann.

Zum Bestimmen des Verschleißzustands basierend auf dem Abstandswert kann die oben beschriebene Steuereinheit vorgesehen sein. Die Steuereinheit kann einen Prozessor und eine Speichereinheit (beispielsweise ein nicht flüchtiger Speicher) umfassen. In der Speichereinheit kann dem initialen Abstandswert ein entsprechender Verschleißzustand zugeordnet sein.

Da bei jedem Vorbeiführen der Laufrolle 102 an der Sensorvorrichtung 104 nur derjenige Abstandswert zwischen Sensorvorrichtung 104 und Messelement 103 bestimmt wird, welcher durch einen Radius eines Oberflächenelements der Lauffläche der Laufrolle 102, das während der Abstandsmessung mit der Steuerkurve in Berührung ist und somit den Abstandswert zwischen Messelement und Sensorvorrichtung zumindest indirekt vorgibt, bestimmt wird, kann bei einmaliger Abstandsmessung nur für eine gleichmäßig (entlang des gesamten Umfangs) verschlissene Laufrolle ein zuverlässiger Verschleißzustand bestimmt werden.

Liegt ein ungleichmäßiger Verschleiß der Laufrolle 102 vor, was beispielsweise bedeuten kann, dass die Lauffläche entlang des Umfangs der Laufrolle 102 unterschiedlich stark abgetragen ist, kann die Laufrolle 102 mehrmals an der Sensorvorrichtung 104 vorbeigeführt werden und auf diese Weise eine Vielzahl von Abstandswerten zwischen Messelement 103 und Sensorvorrichtung 104 für verschiedene entlang des Umfangs der Laufrolle verteilte Oberflächenpunkte der Laufrolle 102 bestimmt werden. Auf diese Weise kann ein Verschleiß an verschiedenen Messpunkten entlang des Umfangs der Laufrolle 102 ermittelt werden.

So kann es beispielsweise vorgesehen sein, dass die Laufrolle 102 zum Bestimmen des Abstandswertes *N* > 1 mal an der Sensorvorrichtung 104 vorbeigeführt wird und bei jedem Vorbeiführen der Laufrolle 102 an der Sensorvorrichtung 104 ein Abstandswert zwischen dem Messelement 103 und der Sensorvorrichtung 104 bestimmt wird und nach einem *N*-maligen Vorbeiführen der Laufrolle 102 an der Sensorvorrichtung 104 ein minimaler Abstandswert der *N* Abstandswerte bestimmt wird und basierend auf dem minimalen Abstandswert der Verschleißzustand bestimmt wird. Bei *N* kann es sich um eine natürliche Zahl größer Null handeln.

Somit kann auch bei einem unregelmäßigen Verschleiß entlang des Umfangs der Lauffläche der Laufrolle 102 eine präzise Bestimmung des Verschleißzustands erreicht werden. Je größer der Wert *N* gewählt wird, desto genauer kann der Verschleißzustand der Laufrolle bestimmt werden. Es kann beispielsweise vorgesehen sein, dass die Laufrolle *N =* 50-Mal an der Sensorvorrichtung 104 vorbeigeführt wird. Dieser Wert ist jedoch als beispielshaft zu verstehen, so kann es beispielsweise auch vorgesehen sein, dass die Laufrolle 25-Mal, 75-Mal, 100-Mal oder um jeden beliebigen anderen Wert an der Sensorvorrichtung 104 zum Bestimmen des minimalen Abstands vorbeigeführt wird.

Um eine kontinuierliche Bestimmung des Verschleißzustands über längerer Zeitintervalle, wie beispielsweise mehrere Stunden, mehrere Tage oder mehrere Wochen oder jedes beliebige andere Zeitintervall zu erreichen, kann es auch vorgesehen sein, dass der minimale Abstandswert nach *N*-maligem Vorbeiführen der Laufrolle 102 an der Sensorvorrichtung 104 gleitend bestimmt und nach einem (*N*+*i*)-maligen Vorbeiführen der Laufrolle 102 an der Sensorvorrichtung 104, der minimale Abstandswert der Abstandswerte der letzten *N* Durchläufe bestimmt wird und basierend auf dem minimalen Abstandswert der letzten *N* Durchläufe der Verschleißzustand bestimmt wird. Somit kann eine präzise Bestimmung des Verschleißzustands auch über längere Zeitintervalle erreicht werden. Bei *i* kann es sich um eine natürliche Zahl größer Null handeln.

Die eben beschriebene Bestimmung des minimalen Abstandswertes kann durch die oben beschriebene Steuereinheit 106 durchgeführt werden.

Beispielsweise kann es auch vorgesehen sein, den Verschleißzustand basierend auf einer Veränderung des minimalen Abstandswertes mit der Zeit zu bestimmen. Durch das Bestimmen der Veränderung des minimalen Abstandswertes mit der Zeit kann beispielsweise auch eine mittlere Veränderung des Verschleißwertes bestimmt werden, welche wiederum eine Extrapolation des Verschleißzustands ermöglichen kann. Basierend auf der Extrapolation kann beispielsweise auch ein Zeitpunkt in der Zukunft bestimmt werden, zu welchem die Laufrolle 102 einen bestimmten Verschleißzustand aufweisen wird und ein anstehender Wechsel der Laufrolle koordiniert werden.

Bei einem normalen Verschleiß der Laufrolle wird sich der Verschleißzustand der Laufrolle mit der Zeit kontinuierlich verschlechtern und die Lauffläche entlang des Umfangs der Laufrolle relativ gleichmäßig abgetragen werden. Liegt jedoch beispielsweise ein Materialfehler an der Laufrolle 102 vor oder kommt es zu einer unüblichen Krafteinwirkung auf die Laufrolle 102, kann es auch passieren, dass ein Teil der Lauffläche der Laufrolle 102 herausbricht oder herausgeschlagen wird. Ein solcher Defekt kann sich dadurch äußern, dass zwei nacheinander bestimmte Abstandswerte zwischen dem Messelement 103 und der Sensorvorrichtung 104 eine ungewöhnlich große Differenz aufweisen. Um zu bestimmen, dass ein Defekt der Laufrolle 102 vorliegt, kann es vorgesehen sein, die Differenz zwischen zwei nacheinander bestimmten Abstandswerten zwischen dem Messelement 103 und der Sensorvorrichtung 104 zu bestimmen und dieses mit einem Schwellenwert zu vergleichen. Ist die Differenz größer als der Schwellenwert, dann kann bestimmt werden, dass ein Defekt an der Laufrolle vorliegt. Ist die Differenz kleiner oder gleich dem Schwellenwert, dann kann bestimmt werden, dass kein Defekt an der Laufrolle vorliegt. In diesem Fall kann die Abweichung beispielsweise einer ungleichmäßigen Abnutzung der Laufrolle zugeordnet werden, bei welcher ein Austausch der Laufrolle nicht sofort notwendig ist.

Hierfür können in der Speichereinheit der oben beschriebenen Steuereinheit 106 eine Reihe von Schwellenwerten hinterlegt sein. Beispielsweise kann einem bestimmten Typ von Laufrolle 102 ein bestimmter Schwellenwert zugeordnet sein. Die Steuereinheit 106 kann zum einen vorgesehen sein, um die Differenz zwischen den beiden nacheinander aufgenommenen Abstandswerten zu bestimmen und die Differenz mit dem Schwellenwert zu vergleichen.

Wenn bestimmt wird, dass ein Defekt an der Laufrolle vorliegt, kann es vorgesehen sein, dass eine Information an einen Benutzer ausgegeben wird, welche darauf hinweist, dass die Laufrolle 102 defekt und ein Wechsel der Laufrolle 102 notwendig ist. Alternativ kann es auch vorgesehen sein, dass ein automatisierter Wechsel der Laufrolle 102, beispielsweise durch eine automatisierte Wechseleinrichtung, eingeleitet wird.

Fig. 2 zeigt die bereits im Zusammenhang mit der Fig. 1 beschriebene Kurvensteuerung 100 in einer Seitenansicht 100a entsprechend einer weiteren Ausführungsform. Die Ausführungsform der Fig. 2 kann mit der Ausführungsform der Fig. 1 kombiniert werden.

Wie bereits im Zusammenhang mit der Fig. 1 beschreiben, kann die Laufrolle 102 auf einem Profil 101a der Kurvensteuerung 101 geführt sein, welches, wie im Zusammenhang mit der Fig. 1 beschrieben, senkrecht ausgerichtet entlang des Umfangs neben einer scheibenartigen Grundplatte 101b der Kurvensteuerung 101 angeordnet sein kann. Diese Ausgestaltung der Kurvensteuerung 101 ist als beispielhaft zu verstehen. Bezüglich alternativer Ausgestaltungsarten wird auf die im Zusammenhang mit der Fig. 1 gemachten Ausführungen verwiesen.

Die Sensorvorrichtung 104 kann über eine Haltevorrichtung 107 an einer Unterseite der Grundplatte 101b der Steuerkurve 101 befestigt sein. Mittels der Haltevorrichtung 107 kann die Sensorvorrichtung 104 derart ausgerichtet sein, dass, wie bereits im Zusammenhang mit der Fig. 1 beschrieben, eine Messrichtung 109 der Sensorvorrichtung 104 senkrecht auf einer Rotationsachse 110 des Messelements 103 steht.

In der Ausführungsform der Fig. 2 ist das Messelement 103 derart an der Laufrolle 102 befestigt, dass eine Längsachse des Messelements 103 mit einer Rotationsachse der Laufrolle 102 zusammenfällt. Das Messelement 103 ist in der hier gezeigten Ausführungsform als Hohlzylinder ausgestaltet, welcher mittels einer Zylinderschraube 108 an der Laufrolle 102 befestigt sein kann. Auch diese spezifische Ausgestaltungsart des Messelements ist als beispielhaft zu verstehen.

An einer Seite der Laufrolle 102, welche der Seite an welcher das Messelement 103 angeordnet ist, gegenüberliegt, kann die Laufrolle 102 über eine Führungseinrichtung 105 mit einer Behandlungseinheit oder einer Komponente einer Behandlungseinheit einer Behälterbehandlungsmaschine in Verbindung stehen. Durch das Entlangführen der Laufrolle 102 an dem Profil 101a der Steuerkurve 101 kann somit, wie in der Fig. 1 ausführlich beschrieben, eine Steuerung der Komponente der Behandlungseinheit oder der Behandlungseinheit erreicht werden.

## Patentansprüche

1. Verfahren zum Bestimmen eines Verschleißzustands einer Laufrolle einer Kurvensteuerung für eine Behälterbehandlungsmaschine, wobei die Kurvensteuerung eine Steuerkurve, wenigstens eine entlang der Steuerkurve beweglich geführte Laufrolle und ein mit der Laufrolle entlang der Steuerkurve mitgeführtes Messelement umfasst, wobei die Steuerkurve eine Sensorvorrichtung umfasst, wobei die Laufrolle beim Entlanglaufen an der Steuerkurve an der Sensorvorrichtung vorbeigeführt wird und beim Vorbeiführen der Laufrolle mittels der Sensorvorrichtung ein Abstandswert zwischen dem Messelement und der Sensorvorrichtung bestimmt wird, wobei basierend auf dem Abstandswert ein Verschleißzustand der Laufrolle bestimmt wird.

2. Verfahren nach Anspruch 1, wobei die Laufrolle zum Bestimmen des Abstandswertes *N >* 1 mal an der Sensorvorrichtung vorbeigeführt wird, wobei bei jedem Vorbeiführen der Laufrolle an der Sensorvorrichtung ein Abstandswert zwischen dem Messelement und der Sensorvorrichtung bestimmt wird, wobei nach einem *N*-maligen Vorbeiführen der Laufrolle an der Sensorvorrichtung ein minimaler Abstandswert der *N* Abstandswerte bestimmt wird und basierend auf dem minimalen Abstandswert der Verschleißzustand bestimmt wird.

3. Verfahren nach Anspruch 2, wobei der minimale Abstandswert nach *N*-maligem Vorbeiführen der Laufrolle an der Sensorvorrichtung gleitend bestimmt wird, wobei nach einem (*N*+*i*)-maligen Vorbeiführen der Laufrolle an der Sensorvorrichtung, der minimale Abstandswert der Abstandswerte der letzten *N* Durchläufe bestimmt wird und wobei basierend auf dem minimalen Abstandswert der letzten *N* Durchläufe der Verschleißzustand bestimmt wird.

4. Verfahren nach einem der Ansprüche 2 oder 3, wobei der Verschleißzustand basierend auf einer Veränderung des minimalen Abstandswertes mit der Zeit bestimmt wird.

5. Verfahren nach Anspruch 4, wobei, wenn eine Differenz zwischen zwei nacheinander bestimmten Abstandswerten zwischen dem Messelement und der Sensorvorrichtung größer als ein Schwellenwert ist, bestimmt wird, dass ein Defekt an der Laufrolle vorliegt.

6. Verfahren nach einem der Ansprüche 1 bis 5, wobei das Messelement eine im Wesentlichen zylindrische Form aufweist und eine Längsachse des Messelements parallel zu einer Rotationsachse der Laufrolle ausgerichtet ist oder wobei eine Längsachse des Messelements mit einer Rotationsachse der Laufrolle zusammenfällt.

7. Verfahren nach einem der Ansprüche 1 bis 6, wobei die Sensorvorrichtung eine optische Sensoreinheit, beispielsweise einen Laser, eine akustische Sensoreinheit, beispielsweise einen Ultraschallsensor, oder eine induktive Sensoreinheit umfasst, wobei wenn die Sensorvorrichtung die induktive Sensoreinheit umfasst, das Messelement ein Metall umfasst.

8. Kurvensteuerung für eine Behälterbehandlungsmaschine, wobei die Kurvensteuerung eine Steuerkurve, wenigstens eine entlang der Steuerkurve beweglich geführte Laufrolle, ein mit der Laufrolle entlang der Steuerkurve mitgeführtes Messelement und eine Steuereinheit umfasst, wobei die Steuerkurve eine Sensorvorrichtung umfasst, wobei die Laufrolle beim Entlanglaufen an der Steuerkurve an der Sensorvorrichtung vorbeigeführt und beim Vorbeiführen der Laufrolle mittels der Sensorvorrichtung ein Abstandswert zwischen dem Messelement und der Sensorvorrichtung bestimmt werden kann, wobei die Steuereinheit ausgebildet ist, basierend auf dem Abstandswert ein Verschleißzustand der Laufrolle zu bestimmen.

9. Kurvensteuerung nach Anspruch 8, wobei die Laufrolle zum Bestimmen des Abstandswerts *N >* 1 mal an der Sensorvorrichtung vorbeigeführt werden kann, wobei bei jedem Vorbeiführen der Laufrolle an der Sensorvorrichtung ein Abstandswert zwischen dem Messelement und der Sensorvorrichtung bestimmt wird, wobei die Steuereinheit ausgebildet ist, nach einem *N-*maligen Vorbeiführen der Laufrolle an der Sensorvorrichtung einen minimalen Abstandswert der *N* Abstandswerte zu bestimmen und die Steuereinheit ausgebildet ist, basierend auf dem minimalen Abstandswert den Verschleißzustand zu bestimmen.

10. Kurvensteuerung nach Anspruch 9, wobei die Steuereinheit ausgebildet ist, den minimalen Abstandswert nach *N*-maligem Vorbeiführen der Laufrolle an der Sensorvorrichtung gleitend zu bestimmen, wobei nach einem (*N* + *i*)-maligen Vorbeiführen der Laufrolle an der Sensorvorrichtung, der minimale Abstandswert der Abstandswerte der letzten *N* Durchläufe bestimmt wird und die Steuereinheit ausgebildet ist, basierend auf dem minimalen Abstandswert der letzten *N* Durchläufe den Verschleißzustand zu bestimmen.

11. Kurvensteuerung nach einem der Ansprüche 9 oder 10, wobei die Steuereinheit ausgebildet ist, den Verschleißzustand basierend auf einer Veränderung des minimalen Abstandswertes mit der Zeit zu bestimmen.

12. Kurvensteuerung nach Anspruch 11, wobei die Steuereinheit ausgebildet ist zu bestimmen, dass ein Defekt an der Laufrolle vorliegt, wenn eine Differenz zwischen zwei nacheinander bestimmten Abstandswerten zwischen dem Messelement und der Sensorvorrichtung größer als ein Schwellenwert ist.

13. Kurvensteuerung nach einem der Ansprüche 8 bis 12, wobei das Messelement eine im Wesentlichen zylindrische Form aufweist und eine Längsachse des Messelements parallel zu einer Rotationsachse der Laufrolle ausgerichtet ist oder wobei eine Längsachse des Messelements mit einer Rotationsachse der Laufrolle zusammenfällt.

14. Kurvensteuerung nach einem der Ansprüche 8 bis 13, wobei die Sensorvorrichtung eine optische Sensoreinheit, wie beispielsweise einen Laser, eine akustische Sensoreinheit, wie beispielsweise einen Ultraschallsensor, oder eine induktive Sensoreinheit umfasst, wobei wenn die Sensorvorrichtung die induktive Sensoreinheit umfasst, das Messelement ein Metall umfasst.

15. Kurvensteuerung nach einem der Ansprüche 8 bis 14, wobei die Sensorvorrichtung mittels einer Haltevorrichtung an der Steuerkurve befestigt ist, wobei eine Messrichtung entlang welcher der Abstandswert zwischen der Sensorvorrichtung und dem Messelement bestimmt werden kann, senkrecht auf einer Rotationsachse des Messelements steht.
